# EUROPÄISCHE PATENTSCHRIFT

(11) **EP 2 906 441 B1**
(45) Veröffentlichungstag und Bekanntmachung des Hinweises auf die Patenterteilung: **12.12.2018**
(21) Anmeldenummer: 13774206.0
(22) Anmeldetag: 10.10.2013
(51) Int. Cl.: B60L 3/04, B60L 11/00, B60L 11/18, H02P 27/06, H02J 7/34, H02H 3/00, H02M 1/32, B60L 3/00, H02J 7/00, H02M 7/5387

(54) **SCHALTUNGSANORDNUNG ZUM ENTLADEN EINES ELEKTRISCHEN ENERGIESPEICHERS UND STROMRICHTER MIT EINER DERARTIGEN SCHALTUNGSANORDNUNG**
CIRCUIT ASSEMBLY FOR DISCHARGING AN ELECTRICAL ENERGY STORE AND POWER CONVERTER HAVING SUCH A CIRCUIT ASSEMBLY
ENSEMBLE DE CIRCUIT DE DÉCHARGE D'UN ACCUMULATEUR D'ÉNERGIE ÉLECTRIQUE ET CONVERTISSEUR STATIQUE ÉQUIPÉ D'UN TEL ENSEMBLE DE CIRCUIT

(30) Priorität: 12.10.2012 DE 102012218604
(43) Veröffentlichungstag der Anmeldung: 19.08.2015
(73) Patentinhaber: Conti Temic Microelectronic GmbH, 90411 Nürnberg (DE)
(72) Erfinder: KRELLA, Uwe, 90443 Nürnberg (DE); FLOCK, Stefan, 91187 Röttenbach (DE); SIWAK, Olga, 90409 Nürnberg (DE)
(86) Internationale Anmeldenummer: PCT/EP2013/071184
(87) Internationale Veröffentlichungsnummer: WO 2014/057047

(56) Entgegenhaltungen:
- EP-A2- 2 495 854
- DE-A1- 19 959 716
- DE-A1-102008 010 978
- DE-A1-102008 061 585
- JP-A- H08 205 401
- JP-A- S61 191 299

## Beschreibung

Die vorliegende Erfindung betrifft eine Schaltungsanordnung zum Entladen eines elektrischen Energiespeichers, insbesondere eines Zwischenkreiskondensators eines Elektro- oder Hybridfahrzeugs. Ferner betrifft die Erfindung einen Stromrichter zum Bereitstellen eines Stroms für eine elektrische Maschine mit einer genannten Schaltungsanordnung.

Bei Hybrid- oder Elektrofahrzeugen werden elektrische Energiespeicher verwendet, welche Strom beziehungsweise elektrisch Energie mit einer Spannung von mehreren Hundert Volt speichern beziehungsweise bereitstellen können. Spannungen, die höher als 60 Volt sind, sind gefährlich für Menschen. Deshalb gibt es diverse Sicherheitsanforderungen, welche vorschreiben, dass die genannten elektrischen Energiespeicher, wie zum Beispiel die Zwischenkreiskondensatoren eines Fahrzeugs, nur bei Bedarf kurzzeitig einen Strom mit einer Spannung von mehr als 60 Volt speichern dürfen, und in einem Fehlerfall, wie zum Beispiel bei einem Defekt infolge eines Unfalls des Fahrzeugs, oder vor einer Wartungsarbeit möglichst schnell bis unter 60 Volt aktiv entladen werden können.

JP S61 191299 A beschreibt eine Entladeschaltung zum Entladen eines Kondensators mit einem ersten und einem zweiten Entladestrompfad.

DE 10 2008 061585 A1 beschreibt ein Fahrzeug mit einer Versorgungseinrichtung für einen Elektromotor und ein Verfahren zur Stromversorgung des Elektromotors.

DE 10 2008 010978 A1 beschreibt eine Vorrichtung zum Entladen eines elektrischen Netzes oder eines kapazitiven Bauelements, umfassend einen schaltbaren Widerstand.

EP 2 495 854 A2 beschreibt eine Entladeschaltung umfassend eine Filtereinheit und einen Schalter, welcher von der Filtereinheit gesteuert wird, und eine Entladeeinheit, welche ein kapazitives Schaltungselement entlädt, wenn der Schalter eingeschaltet ist. JP H08 205401 A beschreibt eine Schaltung zur automatischen Entladung eines Kondensators.

DE 199 59 716 A1 beschreibt eine Einrichtung zum Entladen eines Kondensators eines Stromversorgungssystems. Die Einrichtung umfasst eine Entladeschaltung, welche mit dem Kondensator elektrisch verbunden ist.

Die Aufgabe der vorliegenden Erfindung liegt somit darin, eine sichere, effiziente und zuverlässige Möglichkeit zum Entladen eines elektrischen Energiespeichers in einem Fahrzeug zu schaffen.

Diese Aufgabe wird durch die unabhängigen Ansprüche gelöst. Vorteilhafte Ausgestaltungen sind Gegenstand der Unteransprüche.

Gemäß einem ersten Aspekt wird eine Schaltungsanordnung zum Entladen eines elektrischen Energie speichers, insbesondere eines Zwischenkreiskondensators eines Hybrid- oder Elektrofahrzeugs mit folgenden Merkmalen geschaffen.

Demnach weist die Schaltungsanordnung einen ersten Entladestrompfad von einem ersten, positiven Stromanschluss des Energiespeichers zu einem zweiten, negativen Stromanschluss des Energiespeichers mit einem Spannungsbegrenzer zu einer ungesteuerten, passiven Entladung des Energiespeichers und zum Halten einer Ladespannung des Energiespeichers zumindest auf einer Spannungsschwelle auf. Dabei weist der Spannungsbegrenzer einen ersten Stromanschluss zu einer elektrischen Verbindung mit dem positiven Stromanschluss des Energiespeichers und einen zweiten Stromanschluss zu einer elektrischen Verbindung mit dem negativen Stromanschluss des Energiespeichers auf.

Die Schaltungsanordnung umfasst ferner einen zweiten Entladestrompfad von dem positiven Stromanschluss des Energiespeichers zu dem negativen Stromanschluss des Energiespeichers parallel zu dem ersten Entladestrompfad, mit einem einen Ansteueranschluss aufweisenden, über diesen Ansteueranschluss steuerbaren Halbleiterschalter zu einer gesteuerten, aktiven Entladung des Energiespeichers. Dabei weist der Halbleiterschalter einen ersten Stromanschluss zu einer elektrischen Verbindung mit dem positiven Stromanschluss des Energiespeichers und einen zweiten Stromanschluss zu einer elektrischen Verbindung mit dem negativen Stromanschluss des Energiespeichers auf. Dadurch stellt der Halbleiterschalter in einem geschlossen Schaltzustand einen geschlossenen Stromkreis von dem positiven Stromanschluss des Energiespeichers zu dem negativen Stromanschluss des Energiespeichers her.

Die Schaltungsanordnung umfasst zudem einen ersten Steuerpfad zwischen dem ersten Stromanschluss des Spannungsbegrenzers und dem Ansteueranschluss des Halbleiterschalters zum Bereitstellen eines ersten Steuersignals von dem ersten Stromanschluss des Spannungsbegrenzers an den Ansteueranschluss des Halbleiterschalters zum Ansteuern des Halbleiterschalters, zum Beispiel zum gesteuerten Schließen des Halbleiterschalters mit einem an dem ersten Stromanschluss des Spannungsbegrenzers anliegenden Spannungspotential. Dabei ist der Halbleiterschalter so ausgeführt, dass dieser von dem am ersten Stromanschluss des Spannungsbegrenzers anliegenden Spannungspotential gesteuert zur aktiven Entladung des Energiespeichers geschlossen werden kann.

Eine ungesteuerte, passive Entladung des Energiespeichers bedeutet hier, dass die Entladung des Energiespeichers selbstständig stattfindet, ohne dass dabei ein Steuersignal oder ähnliches diesen Entladevorgang aktiv veranlasst hätte. Dies geschieht durch die permanente Entladung des Energiespeichers durch den geschlossenen Stromkreis von dem positiven Stromanschluss des Energiespeichers über den Spannungsbegrenzer zu dem negativen Stromanschluss des Energiespeichers.

Eine gesteuerte, aktive Entladung des Energiespeichers bedeutet dagegen, dass der Entladevorgang des Energiespeichers nur durch ein aktives Schließen beziehungsweise Herstellen eines geschlossenen Enladestromkreises in dem zweiten Entladestrompfad stattfindet. Dies geschieht vorteilhafterweise durch aktives Schließen des in dem zweiten Entladestrompfad befindlichen Halbleiterschalters mittels einer Änderung des Signalpegels des an dem Ansteueranschluss des Halbleiterschalters anliegenden Steuersignals.

Der erste Steuerpfad dient zu einem aktiven, gesteuerten Schließen des Halbleiterschalters mit einem an dem ersten Stromanschluss des Spannungsbegrenzers anliegenden Steuerspannungspotential und somit zu einem aktiven, gesteuerten Entladen des Energiespeichers. Mit der Spannung beziehungsweise dem Spannungspotential an dem ersten Stromanschluss des Spannungsbegrenzers, welche/welches von dem Spannungsbegrenzer aufrechterhalten wird, kann der Hableiterschalter bei Bedarf sicher gesteuert geschlossen werden. Dadurch, dass dieser erste Steuerpfad, der zum aktiven Entladen des Energiespeichers beispielsweise in einem Fehlerfall dient, zwischen dem ersten und dem zweiten Entladestrompfad angeordnet ist, ist einerseits ermöglicht, die Komponenten der Schaltungsanordnung, durch die Ströme mit einer Spannung von über 60V durchfließen, in einem geschlossen Schaltungsmodul monolithisch zu integrieren. Andererseits ist mit dem ersten Steuerpfad eine direkte permanente Steuerverbindung zu dem Halbleiterschalter zum gesteuerten Schließen des Halbleiterschalters und somit zum aktiven Entladen des Energiespeichers gewährleistet. Dadurch, dass der erste Steuerpfad zum aktiven Entladen des Energiespeichers zwischen dem ersten und dem zweiten Entladestrompfad liegt, ist dieser erste Steuerpfad vor einer Störung oder Beschädigung zumindest genauso gut gesichert wie die beiden Entladestrompfade, sodass ein aktives Entladen des Energiespeichers beispielsweise in einem Fehlerfall sichergestellt werden kann.

Zusammengefasst ist mittels einfachen und kostengünstigen Standardkomponenten eine effiziente und zuverlässige Möglichkeit zum situationsabhängig aktiven und passiven Entladen des Energiespeichers, wie zum Beispiel eines Zwischenkreiskondensators eines Fahrzeugs, geschaffen, welche in einem Schaltungsmodul monolithisch ausgeführt werden kann.

Gemäß einer vorteilhaften Ausgestaltung weist der erste Entladestrompfad zwischen dem positiven Stromanschluss des Energiespeichers und dem Spannungsbegrenzer einen ersten Strombegrenzer zur Begrenzung eines ersten Entladestromes bei einer passiven Entladung des Energiespeichers auf. Dabei umfasst der erste Strombegrenzer vorteilhafterweise einen ersten Stromanschluss zu einer elektrischen Verbindung mit dem positiven Stromanschluss des Energiespeichers und einen zweiten Stromanschluss zu einer elektrischen Verbindung mit dem ersten Stromanschluss des Spannungsbegrenzers. Damit ist der erste Strombegrenzer mit dem Spannungsbegrenzer in einer Reihenschaltung geschaltet.

Gemäß einer weiteren vorteilhaften Ausgestaltung weist der zweite Entladestrompfad zwischen dem positiven Stromanschluss des Energiespeichers und dem Halbleiterschalter einen zweiten Strombegrenzer zur Begrenzung eines zweiten Entladestromes bei einer aktiven Entladung des Energiespeichers auf. Dabei umfasst der zweite Strombegrenzer vorteilhafterweise einen ersten Stromanschluss zu einer elektrischen Verbindung mit dem positiven Stromanschluss des Energiespeichers und einen zweiten Stromanschluss zu einer elektrischen Verbindung mit dem ersten Stromanschluss des Spannungsbegrenzers. Damit ist der zweite Strombegrenzer mit dem Halbleiterschalter in einer Reihenschaltung geschaltet.

Durch diesen ersten und diesen zweiten Strombegrenzer ist der erste bzw. der zweite Entladestrom bei einer passiven oder aktiven Entladung des Energiespeichers auf einen vorgegebenen oder vorgebbaren maximalen Stromwert begrenzt, welcher unschädlich für den Energiespeicher, den Spannungsbegrenzer oder den Halbleiterschalter ist. Damit schützen die beiden Strombegrenzer den Energiespeicher, den Spannungsbegrenzer und den Halbleiterschalter vor Beschädigungen durch einen möglicherweise zu hohen Entladestrom. Durch die entsprechende Dimensionierung des ersten und des zweiten Strombegrenzers, beispielsweise des Widerstandswertes des ersten und des zweiten Strombegrenzers, lässt sich auch die Entladegeschwindigkeit des Energiespeichers einstellen.

Gemäß noch einer weiteren vorteilhaften Ausgestaltung sind die oben genannten beiden Strombegrenzer jeweils als ein Dickschichtwiderstand ausgebildet, welcher vorteilhafterweise aus Widerstandspaste in einem Siebdruckverfahren auf ein keramisches Trägermaterial (zum Beispiel Al2O3: Aluminiumoxid, AlN: Aluminum Nitride) gedruckt wurde. Dabei weist der erste Strombegrenzer vorzugsweise einen größeren beziehungsweise einen weit größeren Widerstandswert auf als der zweite Strombegrenzer. Dadurch ist eine schnellere beziehungsweise eine wesentlich schnellere Entladung durch den zweiten Entladestrompfad bei einem aktiven Entladevorgang im Vergleich zu einem passiven Entladevorgang gewährleistet. Vorteilhafterweise sind die beiden Dickschichtwiderstände des ersten und des zweien Strombegrenzers auf einem und demselben Trägermaterial monolithisch ausgebildet.

Gemäß einer weiteren vorteilhaften Ausgestaltung umfasst der Spannungsbegrenzer eine Zenerdiode. Dabei weist die Zenerdiode vorzugsweise einen Kathodenanschluss und einen Anodenanschluss auf. Über den Kathodenanschluss ist sie mit dem positiven Stromanschluss des Energiespeichers und über ihren Anodenanschluss mit dem negativen Stromanschluss des Energiespeichers elektrisch verbunden. Der erste Steuerpfad verbindet den Kathodenanschluss der Zenerdiode mit dem Ansteueranschluss des Halbleiterschalters elektrisch. Die Zenerdiode begrenzt die Ladespannung an dem elektrischen Energiespeicher auf einen Spannungswert unter 60 Volt, der erforderlich ist, den Halbleiterschalter zu schließen und in einem geschlossenen Schaltzustand zu halten. Dadurch ist es mit einer einfachen und kostengünstigen Zenerdiode gelungen, einerseits die erforderlichen Sicherheitsanforderungen zu erfüllen und andererseits eine aktive Entladung des Energiespeichers bei Bedarf sicherzustellen.

Gemäß einer weiteren vorteilhaften Ausgestaltung weist die Schaltungsanordnung ferner eine Entladesteuereinheit zum Ansteuern beziehungsweise zum gesteuerten Öffnen des Halbleiterschalters sowie einen zweiten Steuerpfad zwischen der Entladesteuereinheit und dem Ansteueranschluss des Halbleiterschalters auf, wobei der zweite Steuerpfad zum Weiterleiten beziehungsweise zum Bereitstellen eines zweiten Steuersignals von der Entladesteuereinheit an den Ansteueranschluss des Halbleiterschalters zum Ansteuern des Halbleiterschalters dient. Dieses zweite Steuersignal hält den Halbleiterschalter in einem geöffneten Schaltzustand, sodass der zweite Entladestrompfad in einem ausgeschalteten, also nicht leitenden Zustand bleibt.

Gemäß noch einer weiteren vorteilhaften Ausgestaltung weist die Schaltungsanordnung ferner eine Überladeerkennungseinheit zum Erkennen einer Überladung des Energiespeichers auf. Es sind ferner ein erster und ein zweiter Signalpfad zwischen der Überladeerkennungseinheit und dem ersten Strombegrenzer zum Messen einer ersten Entladespannung an dem ersten Strombegrenzer vorgesehen. Dabei ist die Überladeerkennungseinheit zur Erkennung einer Überladung des Energiespeichers anhand der ersten Entladespannung ausgeführt. Über die beiden Signalpfade erfasst die Überladeerkennungseinheit eine an dem ersten Strombegrenzer anfallende Entladespannung, welche die Ladespannung des Energiespeichers wiederspiegelt, und erkennt somit eine eventuelle Überladung des Energiespeichers. Bei Bedarf kann der Halbleiterschalter in dem zweiten Entladestrompfad kurzzeitig geschlossen werden und so den Energiespeicher bis auf eine unkritische Ladespannung entladen. Dadurch ist eine Möglichkeit bereitgestellt, den Energiespeicher vor einer Beschädigung durch Überladung zu schützen.

Gemäß einer weiteren vorteilhaften Ausgestaltung umfasst die Schaltungsanordnung ferner eine Diagnoseeinheit zum Ermitteln eines Schaltzustandes des Halbleiterschalters. Es sind dabei ferner ein dritter und ein vierter Signalpfad zwischen der Diagnoseeinheit und dem zweiten Strombegrenzer zur Messung einer zweiten Entladespannung an dem zweiten Strombegrenzer vorgesehen. Über diesen dritten und vierten Signalpfad erfasst die Diagnoseeinheit eine zweite, an dem zweiten Strombegrenzer anfallende Entladespannung während eines aktiven Entladevorgangs des Energiespeichers und ermittelt anhand der erfassten zweiten Entladespannung den Schaltzustand des Halbleiterschalters. Dadurch ist eine Überprüfung des Schaltzustandes des Halbleiterschalters möglich und folglich auch eine Überprüfung des Entladevorgang der gesteuerten aktiven Entladung des Energiespeichers.

Gemäß einer weiteren vorteilhaften Ausgestaltung sind bei der Schaltungsanordnung Entkopplungsschaltungseinheiten vorgesehen, welche jeweils zwischen der Entladesteuereinheit und dem ersten Steuerpfad, zwischen der Überladeerkennungseinheit und dem ersten Entladestrompfad, beziehungsweise zwischen der Diagnoseeinheit und dem zweiten Entladestrompfad angeordnet sind. Diese drei Entkopplungsschaltungseinheiten sind jeweils zu einer galvanischen Trennung der Entladesteuereinheit von dem ersten Steuerpfad und somit von dem ersten Entladestrompfad, der Überladeerkennungseinheit von dem ersten Entladestrompfad, beziehungsweise der Diagnoseeinheit von dem zweiten Entladestrompfad, vorgesehen. Durch diese galvanischen Trennungen ist sichergestellt, dass die Ladespannung an dem Energiespeicher, also die Spannung zwischen dem positiven und dem negativen Stromanschluss des Energiespeichers, welche durchaus über 60 Volt Spannungswert überschreitet, nicht zu diesen Schaltungseinheiten übergreift und diese beschädigt.

Gemäß einer weiteren vorteilhaften Ausgestaltung weist die Schaltungsanordnung ferner eine Gegentaktendstufeneinheit mit einem Steuersignaleingangsanschluss und einem Steuersignalausgangsanschluss zum Ansteuern des Halbleiterschalters auf. Dabei ist der Steuersignaleingangsanschluss mit dem ersten und dem zweiten Steuerpfad elektrisch verbunden. Der Steuersignalausgangsanschluss ist mit dem Ansteueranschluss des Halbleiterschalters elektrisch verbunden. Dadurch leitet die Gegentaktendstufeneinheit je nach Signalpegel das erste an dem ersten Steuerpfad anliegende Steuersignal oder das zweite an dem zweiten Steuerpfad anliegende Steuersignal wahlweise an den Ansteueranschluss des Halbleiterschalters weiter. Mit der Gegentaktendstufeneinheit ist somit eine einfache Schaltung realisiert, mit der das Steuersignal von dem ersten und dem zweiten Steuerpfad in einfacher Weise verstärkt werden können. Mit dem so verstärkten Steuersignal lässt sich der Ansteueranschluss des Halbleiterschalters schnell umladen und der Halbleiterschalter kann somit relativ schnell und verlustleistungsarm umgeschaltet werden.

Gemäß noch einer weiteren vorteilhaften Ausgestaltung ist die Gegentaktendstufeneinheit mit einem Spannungsversorgungsanschluss versehen, wobei dieser Spannungsversorgungsanschluss mit dem ersten Stromanschluss des ersten Spannungsbegrenzers elektrisch verbunden ist. Dadurch kann die Gegentaktendstufeneinheit mit dem von dem Energiespeicher bereitgestellten Strom die Steuersignale verstärken und an den Ansteueranschluss des Halbleiterschalters weiterleiten. Dadurch entfällt eine zusätzliche Stromquelle für die Gegentaktendstufeneinheit. Gemäß einer weiteren vorteilhaften Ausgestaltung weist die Schaltungsanordnung ferner eine Kondensatoreinheit zwischen dem ersten und dem zweiten Stromanschluss des Spannungsbegrenzers zum Bereitstellen eines Ansteuerstromes auf, mit dem der Halbleiterschalter schnell umgeschaltet werden kann.

Gemäß einem zweiten Aspekt wird ein Stromrichter zum Bereitstellen eines Stromes für eine elektrische Maschine angegeben, wobei der Stromrichter einen elektrischen Energiespeicher zur Spannungsstabilisierung in dem Stromrichter und eine oben beschriebene Schaltungsanordnung zum passiven und aktiven Entladen des Energiespeichers aufweist. Vorteilhafte Ausgestaltungen der oben dargestellten Schaltungsanordnung sind, soweit im Übrigen auf den oben genannten Stromrichter übertragbar, auch als vorteilhafte Ausgestaltungen des Stromrichters anzusehen.

Im Folgenden sollen beispielhafte Ausführungsformen der Erfindung Bezug nehmend auf die beiliegenden Zeichnungen näher erläutert werden. In den Zeichnungen sind insbesondere die Komponenten dargestellt, welche für die Beschreibung der Erfindung relevant sind. Je nach Ausgestaltungen können die in den Zeichnungen dargestellten Ausführungsformen weitere in den Zeichnungen nicht dargestellte Komponenten aufweisen. Zudem werden die Komponenten, welche die gleiche technische Eigenschaft und die gleiche Funktionalität aufweisen, mit demselben Bezugszeichen versehen. Dabei zeigen:
- Figur 1: eine schematische Darstellung eines Stromrichters zum Bereitstellen einer elektrischen Energie beziehungsweise eines Stromes für eine elektrische Maschine mit einer Schaltungsanordnung gemäß einer Ausführungsform der Erfindung;
- Figur 2: eine schematische Darstellung einer Schaltungsanordnung gemäß einer ersten Ausführungsform der Erfindung;
- Figur 3: eine schematische Darstellung einer Schaltungsanordnung gemäß einer zweiten Ausführungsform der Erfindung;
- Figur 4: eine schematische Darstellung einer Ausführungsform eines ersten und eines zweiten Strombegrenzers der in Figuren 2 und 3 dargestellten Schaltungsanordnungen.

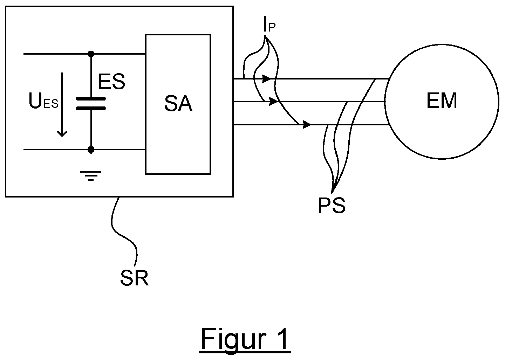

Es sei zunächst auf Figur 1 verwiesen, in der eine elektrische Maschine EM und ein Stromrichter SR schematisch dargestellt sind. Die elektrische Maschine EM ist beispielsweise als eine Synchronmaschine ausgebildet und dient zum Antrieb eines in der Figur nicht dargestellten Elektro- oder Hybridfahrzeugs. Der Stromrichter SR dient zum Bereitstellen von Phasenströmen Ip für die elektrische Maschine EM. Der Stromrichter SR ist mit der elektrischen Maschine EM über drei Stromphasen PS verbunden und versorgt über diese Stromphasen PS die elektrische Maschine EM mit Phasenströmen Ip. Der Stromrichter SR umfasst einen Zwischenkreiskondensator ES als elektrischen Energiespeicher zur Spannungsstabilisierung in dem Stromrichter SR und zum Speichern von dem von der elektrischen Maschine EM induziert und an den Stromrichter SR zurückgespeisten Induktionsstrom. Je nach Leistung der elektrischen Maschine EM kann in dem Zwischenkreiskondensator ES elektrische Ladung mit einer Ladespannung von mehreren Hundert Volt zwischengespeist werden. Spannungen, die höher als 60 Volt sind, sind gefährlich für Menschen. Deshalb darf der Zwischenkreiskondensator ES die elektrische Ladung nur für eine kurze Zeitdauer gespeichert halten. Bei einem Unfall des Fahrzeugs oder bei einer Wartungsarbeit des Stromrichters SR muss der Zwischenkreiskondensator ES möglichst schnell bis zu einer Ladespannung unter 60 Volt aktiv entladen werden. Hierzu weist der Stromrichter SR eine Schaltungsanordnung SA zum passiven und aktiven Entladen des Zwischenkreiskondensators ES.

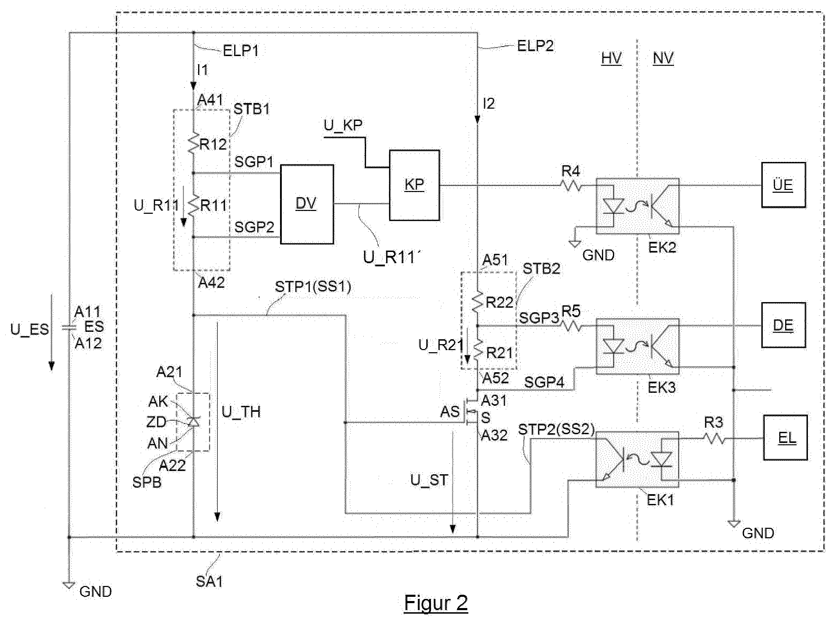

Eine Ausführungsform dieser Schaltungsanordnung SA1 wird in Figur 2 detailliert dargestellt. Figur 2 zeigt einen Zwischenkreiskondensator ES und eine Schaltungsanordnung SA1 zum aktiven und passiven Entladen des Zwischenkreiskondensators ES. Der Zwischenkreiskondensator ES umfasst einen ersten, positiven Stromanschluss A11 und einen zweiten, negativen Stromanschluss A12, wobei der negative Stromanschluss A12 mit dem Masseanschluss GND des in der Figur nicht dargestellten Stromrichters elektrisch verbunden ist.

Die Schaltungsanordnung SA1 weist einen ersten Entladestrompfad ELP1 zum passiven Entladen des Zwischenkreiskondensators ES, beziehungsweise zum Durchleiten eines ersten Entladestromes I1, sowie einen zweiten Entladestrompfad ELP2 zum aktiven Entladen des Energiespeichers ES, beziehungsweise zum Durchleiten eines zweiten Entladestromes I2, auf. Dabei sind der erste und der zweite Entladestrompfad ELP1 und ELP2 zueinander parallel geschaltet und verbinden jeweils den positiven Stromanschluss A11 des Zwischenkreiskondensators ES mit dem negativen Stromanschluss A12 des Zwischenkreiskondensators ES miteinander.

In dem ersten Entladestrompfad ELP1 weist die Schaltungsanordnung SA1 einen ersten Strombegrenzer STB1 zum Begrenzen des Entladestromes I1 in dem passiven Entladevorgang und einen Spannungsbegrenzer SPB zum Halten der Ladespannung U_ES des Zwischenkreiskondensators ES auf eine minimal vorgesehene Spannungsschwelle U_TH. Dabei umfasst der erste Strombegrenzer STB1 einen ersten Stromanschluss A41 sowie einen zweiten Stromanschluss A42, und ist über den ersten Stromanschluss A41 mit dem positiven Stromanschluss A11 des Zwischenkreiskondensators ES elektrisch verbunden. Der Spannungsbegrenzer SPB umfasst seinerseits einen ersten Stromanschluss A21 und einen zweiten Stromanschluss A22, und ist über den ersten Stromanschluss A21 mit dem zweiten Stromanschluss A42 des ersten Strombegrenzers STB1 und über den zweiten Stromanschluss A22 mit dem negativen Stromanschluss A12 des Zwischenkreiskondensators ES elektrisch verbunden.

Der erste Strombegrenzer STB1 umfasst einen ersten Widerstand R11 und einen zweiten Widerstand R12 in einer Reihenschaltung zwischen dem ersten und dem zweiten Stromanschluss A41 und A42. Die beiden Widerstände R11 und R12 funktionieren somit wie ein Spannungsteiler. Der Spannungsbegrenzer SPB enthält seinerseits eine Zenerdiode ZD mit einem Kathodenanschluss AK und einem Anodenanschluss AN. Dabei ist die Zenerdiode ZD über den Kathodenanschluss AK mit dem zweiten Stromanschluss A42 des ersten Strombegrenzers STB1 elektrisch verbunden und über den Anodenanschluss AN mit dem zweiten negativen Stromanschluss A12 des Zwischenkreiskondensators ES und somit auch mit dem Masseanschluss GND elektrisch verbunden. Damit hält der Spannungsbegrenzer SPB die Ladespannung U_ES des Zwischenkreiskondensators ES auf einer Spannungsschwelle U_TH, welche der Sperrspannung der Zenerdiode ZD entspricht.

In dem zweiten Entladestrompfad ELP2 weist die Schaltungsanordnung SA1 einen zweiten Strombegrenzer STB2 und einen Halbleiterschalter S in eine Reihenschaltung auf. Der zweite Strombegrenzer STB2 umfasst einen ersten Stromanschluss A51 und einen zweiten Stromanschluss A52, und ist über den ersten Stromanschluss A51 mit dem positiven Stromanschluss des Zwischenkreiskondensators ES elektrisch verbunden. Zwischen dem ersten und dem zweiten Stromanschluss A51 und A52 weist der zweite Strombegrenzer STB2 einen ersten Widerstands R21 und einen zweiten Widerstands R22 in einer Reihenschaltung. Dabei ist der Gesamtwiderstandswert des ersten Strombegrenzers STB1, also die Summe der Widerstandswerte des ersten und des zweiten Widerstandes R11 und R12 des ersten Strombegrenzers STB1, größer als der Gesamtwiderstandswert des zweiten Strombegrenzers STB2, also die Summe der Widerstandswerte des ersten und des zweiten Widerstandes R21 und R22 des zweiten Strombegrenzers STB2.

Der Halbleiterschalter S umfasst einen ersten Stromanschluss A31 und einen zweiten Stromanschluss A32 sowie zwischen dem ersten und dem zweiten Stromanschluss eine Laststrecke zum Durchleiten des zweiten Entladestromes I2 von dem ersten zu dem zweiten Stromanschluss A31 und A32. Über den ersten Stromanschluss A31 ist der Halbleiterschalter S mit dem zweiten Stromanschluss A52 des zweiten Strombegrenzers STB2 elektrisch verbunden. Mit dem zweiten Stromanschluss A32 ist der Halbleiterschalter S mit dem negativen Stromanschluss A12 des Zwischenkreiskondensators ES beziehungsweise mit dem Masseanschluss GND elektrisch verbunden.

Der Halbleiterschalter S weist ferner einen Steueranschluss AS auf, über den der Halbleiterschalter S angesteuert geschlossen und geöffnet, beziehungsweise ein- und ausgeschaltet wird. Zwischen dem Ansteueranschluss AS des Halbleiterschalters S und dem ersten Stromanschluss A21 des Spannungsbegrenzers STB weist die Schaltungsanordnung SA1 einen ersten Steuerpfad STP1 auf, über den das erste Steuersignal SS1 zum Schließen des Halbleiterschalters S an dem Ansteueranschluss AS anlegbar ist.

Die Schaltungsanordnung SA1 weist ferner eine Entladesteuereinheit EL zum Ansteuern des Halbleiterschalters S auf. Zwischen der Entladesteuereinheit EL und dem Ansteueranschluss AS des Halbleiterschalters S ist ein zweiter Steuerpfad STP2 zum Weiterleiten eines zweiten Steuersignals SS2 von der Entladesteuereinheit EL an den Ansteueranschluss AS vorgesehen.

Aufgrund einer hohen Ladespannung bei dem Zwischenkreiskondensator ES liegt in dem ersten und dem zweiten Entladestrompfad ELP1 und ELP2 sowie dem ersten Steuerpfad STP1 und somit an dem Ansteueranschluss AS des Halbleiterschalters S eine Spannung von bis zu mehreren Hundert Volt an, welche weit über der vorgesehene Betriebsspannung der Entladesteuereinheit EL liegt und somit diese unter Umständen beschädigen kann. Zum Schützen der Entladesteuereinheit EL vor einer derartigen hohen Spannung weist die Schaltungsanordnung SA1 in dem zweiten Steuerpfad STP2 beziehungsweise zwischen dem Ansteueranschluss AS des Halbleiterschalters S und der Entladesteuereinheit EL eine erste Entkopplungsschaltungseinheit EK1 auf, welche zu einer galvanischen Trennung der Entladesteuereinheit EL von dem ersten Steuerpfad STP1 dient. Dabei ist die erste Entkopplungsschaltungseinheit EK1 als ein Optokoppler mit einer mit der Entladesteuereinheit EL elektrisch verbundenen Leuchtdiode als optischem Sender und einem mit dem zweiten Steuerpfad STP2 elektrisch verbundenen Fototransistor als optischem Empfänger ausgebildet. Zwischen der Entladesteuereinheit EL und der ersten Entkopplungsschaltungseinheit EK1 weist die Schaltungsanordnung SA1 ferner einen Vorwiderstand R3 zur Begrenzung des durch die Leuchtdiode der Entkopplungsschaltungseinheit EK1 fließenden Stromes auf.

Die Schaltungsanordnung SA1 weist ferner eine Überwachungseinheit ÜE zum Überwachen einer Überladung des Zwischenkreiskondensators ES auf. Zudem weist die Schaltungsanordnung SA1 zwischen dem Knotenpunkt der beiden Widerständen R11 und R12 des ersten Strombegrenzers STB1 und der Überwachungseinheit ÜE sowie zwischen dem zweiten Stromanschluss A42 des ersten Strombegrenzers STB1 und der Überwachungseinheit ÜE jeweils einen ersten Signalpfad SGP1 und einen zweiten Signalpfad SGP2 zum Messen einer an dem ersten Widerstand R11 des Strombegrenzers STB1 anliegenden Spannung U_R11 auf, welche proportional zu der Ladespannung U_ES des Zwischenkreiskondensators ES ist. Diese gemessene Spannung U_R11 wird von einem zwischen den beiden Signalpfaden SGP1 und SGP2 und der Überwachungseinheit ÜE angeordneten Differenzverstärker DV verstärkt und einem Komparator KP als verstärkte Messspannung U_R11' weitergeleitet, der zwischen dem Differenzverstärker DV und der Überwachungseinheit ÜE angeordnet ist.

Der Komparator KP vergleicht die verstärkte Messspannung U_R11' mit einer vorgegebenen oder vorgebbaren Referenzspannung U_KP, welche indikativ für eine optimale Ladespannung bei dem Zwischenkreiskondensator ES ist.

Zwischen dem Komparator KP und der Überwachungseinheit ÜE weist die Schaltungsanordnung SA1 eine zweite Entkopplungsschaltungseinheit EK2 zur galvanischen Trennung der Überwachungseinheit ÜE von dem Komparator KP beziehungsweise von dem zweiten Entladestrompfad ELP2. Dabei ist die zweite Entkopplungsschaltungseinheit EK2 ebenfalls als ein Optokoppler mit einer mit dem Komparator KP elektrisch verbundenen Leuchtdiode als optischem Sender und einem mit der Überwachungseinheit ÜE elektrisch verbundenen Fototransistor als optischem Empfänger ausgebildet. Zwischen dem Komparator KP und der zweiten Entkopplungsschaltungseinheit EK2 umfasst die Schaltungsanordnung SA1 ferner einen Vorwiderstand R4 zur Begrenzung des durch die Leuchtdiode der Entkopplungsschaltungseinheit EK2 fließenden Stromes.

Die Schaltungsanordnung SA1 weist außerdem eine Diagnoseeinheit DE zum Ermitteln eines Schaltzustandes des Halbleiterschalters S auf. Hierzu weist die Schaltungsanordnung SA1 zwischen dem Knotenpunkt der beiden Widerständen R21 und R22 des zweiten Strombegrenzers STB2 und der Diagnoseeinheit DE sowie zwischen dem zweiten Stromanschluss A52 des zweiten Strombegrenzers STB2 und der Diagnoseeinheit DE jeweils einen dritten Signalpfad SGP3 und einen vierten Signalpfad SGP4 zum Messen einer an dem ersten Widerstand R21 des Strombegrenzers STB2 anliegenden Spannung U_R21 auf, welche indikativ für einen Schaltzustand des Halbleiterschalters S ist.

Um die Diagnoseeinheit DE vor einer Beschädigung durch die im zweiten Entladestrompfad ELP2 herrschenden hohen Spannungen zu schützen, weist die Schaltungsanordnung SA1 zwischen der Diagnoseeinheit DE und dem zweiten Entladestrompfad ELP2 eine dritte Entkopplungsschaltungseinheit EK3 auf, welche zu einer galvanischen Trennung der Diagnoseeinheit DE von dem zweiten Entladestrompfad ELP2 dient. Dabei ist die dritte Entkopplungsschaltungseinheit EK3 auch als ein Optokoppler mit einer mit dem zweiten Entladestrompfad ELP2 elektrisch verbundenen Leuchtdiode als optischem Sender und einem mit der Diagnoseeinheit DE elektrisch verbundenen Fototransistor als optischem Empfänger ausgebildet. Ferner umfasst die Schaltungsanordnung SA1 an dem dritten Signalpfad SGP3 einen Vorwiderstand R5 zur Begrenzung des durch die Leuchtdiode der Entkopplungsschaltungseinheit EK3 fließenden Stromes.

Dadurch teilen die drei Entkopplungsschaltungseinheiten EK1, EK2 und EK3 die Schaltungsanordnung SA1 in einen ersten Spannungsbereich HV mit einem Spannungsniveau von mehreren Hundert Volt und einen zweiten Spannungsbereich NV mit einem Spannungsniveau von bis zu einigen Zehn Volt, welches aber 60 Volt nicht überschreitet. Dabei umfasst der erste Spannungsbereich HV den ersten und den zweiten Entladestrompfad ELP1 und ELP2 samt den elektrischen und elektronischen Bauelementen STB1, SPB, DV, KP, STB2 und S in diesen beiden Enladestrompfaden ELP1 und ELP2 sowie den ersten Steuerpfad STP1. Der zweite Spannungsbereich NV umfasst die Überwachungseinheit ÜE, die Diagnoseeinheit DE und die Entladesteuereinheit EL, welche vor einer in dem ersten Spannungsbereich HV herrschenden Spannung von mehreren Hundert Volt geschützt werden sollen.

Während des Betriebs des Fahrzeugs speichert der Zwischenkreiskondensator ES die von der elektrischen Maschine EM induzierten und zu dem Stromrichter rückgespeisten Induktionsströme und gleicht somit die Spannungsschwankungen in dem Stromrichter aus. Da der Stromrichter eine Spannung von mehreren Hundert Volt in Phasenströmen für die elektrische Maschine bereitstellt, kann der Zwischenkreiskondensator ES mit einer Ladespannung von bis zu mehreren Hundert Volt aufgeladen werden. Aufgrund der diversen Sicherheitsanforderungen muss der in dem Zwischenkreiskondensator ES zwischengespeicherte Strom ununterbrochen entladen werden, ohne dass dabei ein externer Eingriff hierzu erforderlich ist. Im Falle eines Unfalls des Fahrzeugs oder vor einer Wartungsarbeit bei dem Stromrichter muss der Zwischenkreiskondensator ES in kürzester Zeit bis auf unter 60 Volt aktiv entladen werden.

Das passive Entladen des Zwischenkreiskondensators ES ohne externen Einfluss erfolgt durch den ersten Entladestrompfad ELP1 der Schaltungsanordnung SA1. Durch den permanent geschlossenen Stromkreis von dem positiven Stromanschluss A11 des Zwischenkreiskondensators ES über den ersten Strombegrenzer STB1 und den Spanungsbegrenzer SPB und anschließend zu dem negativen Stromanschluss A12 des Zwischenkreiskondensators ES wird der Zwischenkreiskondensator ES ununterbrochen entladen, solange die Ladespannung U_ES des Zwischenkreiskondensators ES bis auf die Sperrspannung der Zenerdiode ZD, nämlich die Spannungsschwelle U_TH des Spannungsbegrenzers SPB, abfällt. Durch die geeignete Auswahl der Widerstandswerte der beiden Winderstände R11 und R12 in dem ersten Strombegrenzer STB1 lässt sich die Entladegeschwindigkeit an dem Zwischenkreiskondensator ES einstellen. Durch die geeignete Auswahl der Zenerdiode ZD lässt sich die Spannungsschwelle U_TH einstellen, welche unter 60 Volt liegt und somit die genannten Sicherheitsanforderungen erfüllt. Solange die Spannung, die an der Zenerdiode ZD anliegt, höher als die Sperrspannung der Zenerdiode ZD, verhält sich die Zenerdiode ZD niederohmig und leitet somit den Entladestrom I1 durch.

In diesem Zustand sendet/leitet die Entladesteuereinheit EL einen Strom an/durch die Leuchtdiode der ersten, als Optokoppler ausgebildeten Entkopplungsschaltungseinheit EK1, welcher von der Leuchtdiode in ein optisches Signal umgewandelt und an den Fototransistor der Entkopplungsschaltungseinheit EK1 gesendet wird. Von diesem optischen Signal gesteuert wird der Fototransistor geschlossen und verbindet den Ansteueranschluss AS des Halbleiterschalters S mit dem Massepotential an dem Masseanschluss GND. Dadurch wird der Halbleiterschalter S geöffnet und es folgt kein aktives Entladen des Zwischenkreiskondensators ES durch den zweiten Entladestrompfad ELP2. In diesem Fall erfolgt das passive Entladen durch die Strecke durch den ersten Strombegrenzer STB1, den ersten und den zweiten Steuerpfad STP1 und STP2, sowie den Fototransistor der Entkopplungsschaltungseinheit EK1 zu dem Massepotential an dem Masseanschluss GND.

Wird beispielsweise ein Unfall bei dem Fahrzeug mittels beispielsweise eines hierfür vorgesehenen, in der Figur nicht dargestellten Verzögerungssensor erkannt, so unterbricht die Entladesteuereinheit EL den Stromfluss an die Leuchtdiode der ersten Entkopplungsschaltungseinheit EK1 und somit das optische Signal an den Fototransistor der Entkopplungsschaltungseinheit EK1. Der Fototransistor wird folglich geöffnet und unterbricht somit die elektrische Verbindung zwischen dem Ansteueranschluss AS des Halbleiterschalters S und dem Massepotential an dem Masseanschluss GND. Da die elektrische Verbindung von dem ersten Stromanschluss A21 des Spannungsbegrenzers SPB zu dem Ansteueranschluss AS des Halbleiterschalters S weiterhin durch den ersten Steuerpfad STP1 besteht, wird der Ansteueranschluss AS nun auf dem Spannungspotential des ersten Stromanschlusses A21 des Spannungsbegrenzers SPB gehalten, welches durch entsprechende Dimensionierung der Zenerdiode ZD bezogen auf Massepotential an dem Masseanschluss GND bei/über der zum Schließen des Halbleiterschalters S minimal erforderlichen Einschaltspannung U_ST liegt und somit den Halbleiterschalter S schließt und in diesem geschlossenen Schaltzustand hält. Dadurch leitet der Halbleiterschalter S und es folgt ein aktives Entladen des Zwischenkreiskondensators ES durch den zweiten Entladestrompfad ELP2. Dadurch, dass der Gesamtwiderstand des ersten Strombegrenzers STB1 größer als der Gesamtwiderstand des zweiten Strombegrenzers STB2 ist, wird die elektrische Ladung in dem Zwischenkreiskondensator ES größtenteils durch den zweiten Entladestrompfad ELP2 mit niedrigem Gesamtwiderstand entladen. Die Entladung bei dem aktiven Entladen durch den zweiten Entladestrompfad ELP2 erfolgt somit schneller als bei nur einem passiven Entladen durch den ersten Entladestrompfad ELP1.

Eine Überladung des Zwischenkreiskondensators ES ermittelt die Schaltungsanordnung SA1 wie folgt: Die an dem ersten Widerstand R11 des ersten Strombegrenzers STB1 anfallende Spannung U_R11, welche proportional zu der Ladespannung U_ES des Zwischenkreiskondensators ES ist, wird von dem Differenzverstärker DV gemessen und verstärkt. Die so verstärkte Messspannung U_R11' wird anschließend von einem nachgeschalteten Komparator KP mit einer Referenzspannung U_KP verglichen, welche die optimale Ladespannung des Zwischenkreiskondensators ES wiedergibt.

Ist die verstärkte Messspannung U_R11' niedriger als oder gleich hoch wie die Referenzspannung U_KP, so leitet der Komparator KP keinen Strom an die zweite, ebenfalls als ein Optokoppler ausgebildete Entkopplungsschaltungseinheit EK2 weiter, was einem Aussenden eines Signals mit einem Signalpegel von logisch NULL entspricht. Die Leuchtdiode der zweiten Entkopplungsschaltungseinheit EK2 sendet so kein optisches Signal an den Fototransistor, folglich ist der Fototransistor geöffnet und leitet keinen Strom von der Überladeerkennungseinheit ÜE durch. Die Überladeerkennungseinheit ÜE stellt so fest, dass der Zwischenkreiskondensator ES nicht überladen ist.

Ist die verstärkte Messspannung U_R11' höher als die Referenzspannung U_KP, so sendet der Komparator KP einen Strom, also ein Signal mit einem Signalpegel von logisch EINS, an die zweite Entkopplungsschaltungseinheit EK2. Die Leuchtdiode der zweiten Entkopplungsschaltungseinheit EK2 sendet so ein optisches Signal an den Fototransistor, folglich ist der Fototransistor geschlossen und leitet einen Strom von der Überladeerkennungseinheit ÜE durch zu dem Masseanschluss GND. Die Überladeerkennungseinheit ÜE stellt so fest, dass der Zwischenkreiskondensator ES überladen ist.

Einen Schaltzustand des Halbleiterschalters S ermittelt die Schaltungsanordnung SA1 mithilfe der Diagnoseeinheit DE wie folgt: Ist der Halbleiterschalter S fehlerfrei geschlossen, so fließt ein Teil des Entladestromes I2 in dem zweiten Entladestrompfad ELP2 durch den dritten Signalpfad SGP3, die Leuchtdiode der dritten Entkopplungsschaltungseinheit EK3 und den vierten Signalpfad SGP4 und anschließend zurück zu dem zweiten Entladestrompfad ELP2. Folglich sendet die Leuchtdiode ein optisches Signal an den Fototransistor, der dann geschlossen wird und so einen Strom von der Diagnoseeinheit DE zu dem Masseanschluss GND leitet. Die Diagnoseeinheit DE stellt somit fest, dass der Halbleiterschalter S geschlossen ist.

Ist der Halbleiterschalter S fehlerfrei geöffnet, so fließt kein Strom durch die Leuchtdiode der dritten Entkopplungsschaltungseinheit EK3. Folglich sendet die Leuchtdiode kein optisches Signal an den Fototransistor, der dann geöffnet wird und so keinen Strom von der Diagnoseeinheit DE zu dem Masseanschluss GND leitet. Die Diagnoseeinheit DE stellt folglich fest, dass der Halbleiterschalter S geöffnet ist.

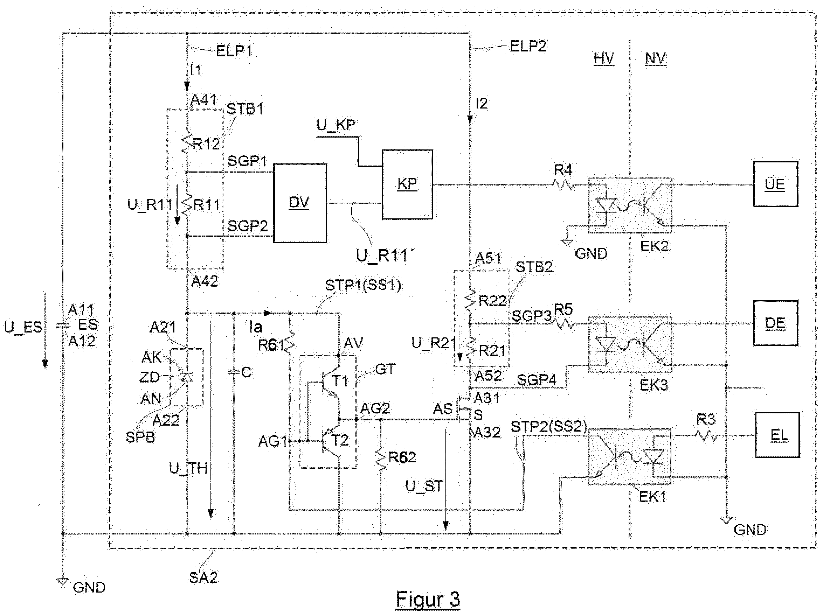

Nachdem die Schaltungsanordnung SA1 gemäß der ersten Ausführungsform der Erfindung mithilfe von Figur 2 beschrieben wurde, sei nun auf Figur 3 verwiesen, in der eine weitere Schaltungsanordnung SA2 gemäß einer zweiten Ausführungsform der Erfindung schematisch gezeigt ist.

Im Unterschied zu der Schaltungsanordnung SA1 in Figur 2 weist die Schaltungsanordnung SA2 in Figur 3 eine Gegentaktendstufeneinheit GT zum schnellen Umschalten des Halbleiterschalters S auf. Dabei umfasst die Gegentaktendstufeneinheit GT einen Steuersignaleingangsanschluss AG1 und einen Steuersignalausgangsanschluss AG2 zum Ansteuern des Halbleiterschalters S, wobei der Steuersignaleingangsanschluss AG1 mit dem ersten und dem zweiten Steuerpfad STP1 und STP2 und der Steuersignalausgangsanschluss AG2 mit dem Ansteueranschluss AS des Halbleiterschalters S elektrisch verbunden ist. Die Gegentaktendstufeneinheit GT weist ferner einen Spannungsversorgungsanschluss AV auf, welcher mit dem ersten Stromanschluss A21 des Spannungsbegrenzers SPB elektrisch verbunden ist. Über diesen Spannungsversorgungsanschluss AV erhält die Gegentaktendstufeneinheit GT von dem Zwischenkreiskondensator ES den zum Ansteuern des Halbleiterschalters S erforderlichen Strom. Die Schaltungsanordnung SA2 weist ferner einen ersten Widerstand R61 zwischen dem ersten Stromanschluss A21 des Spannungsbegrenzers SPB und dem Steuersignaleingangsanschluss AG1 der Gegentaktendstufeneinheit GT zum Einstellen des Stromes an dem Steuersignaleingangsanschluss AG1 auf. Außerdem weist die Schaltungsanordnung SA2 einen zweiten Widerstand R62 zwischen dem Steuersignalausgangsanschluss AG2 der Gegentaktendstufeneinheit GT und dem Masseanschluss GND zum Anlegen des Ansteueranschlusses AS des Halbleiterschalters S auf das Massepotential an dem Masseanschluss GND während der Umschaltvorgänge, damit der Ansteueranschlusses AS kein undefiniertes Spannungspotential annimmt.

Während des Betriebs der Schaltungsanordnung SA2 leitet die Gegentaktendstufeneinheit GT je nach Signalpegel das erste an dem ersten Steuerpfad STP1 anliegende Steuersignal SS1 oder das zweite an dem zweiten Steuerpfad STP2 anliegende Steuersignal SS2 verstärkt an den Ansteueranschluss AS des Halbleiterschalters S weiter. Mit dem so verstärkten Steuersignal SS1, SS2 lässt sich der Ansteueranschluss AS des Halbleiterschalters S schnell umladen und der Halbleiterschalter S kann somit relativ schnell und verlustleistungsarm umgeschaltet werden.

Die Schaltungsanordnung SA2 umfasst ferner einen Kondensator C zwischen dem ersten und dem zweiten Stromanschluss A21 und A22 des Spannungsbegrenzers SPB zum Bereitstellen eines zum schnellen Ansteuern des Halbleiterschalters S beziehungsweise zur schnellen Umladung der Eingangskapazitäten des Ansteueranschlusses AS erforderlichen Ansteuerstromes Ia.

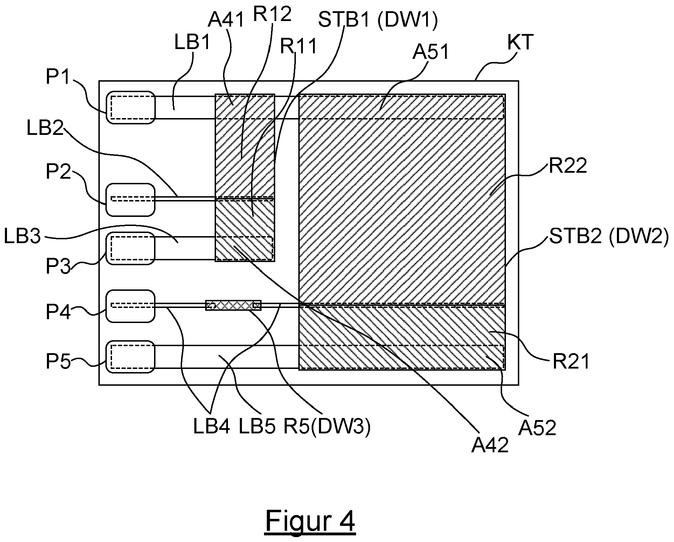

Nachdem die beiden Schaltungsanordnungen SA1 und SA2 gemäß zwei Ausführungsformen der Erfindung mithilfe von Figuren 1 und 2 beschrieben wurden, sei nun auf Figur 4 verwiesen, in der eine Ausführungsform des ersten und des zweiten Strombegrenzers STB1 und STB2 der beiden oben beschriebenen Schaltungsanordnung SA1 und SA2 als eine Draufsicht eines gedruckten Trägerteils schematisch gezeigt ist.

Demnach sind die beiden Strombegrenzer STB1 und STB2 jeweils als ein erster Dickschichtwiderstand DW1 beziehungsweise ein zweiter Dickschichtwiderstand DW2 ausgebildet, welcher vorteilhafterweise aus Widerstandspaste in einem Siebdruckverfahren auf ein keramisches Trägerteil KT (zum Beispiel aus Al2O3, AlN) gedruckt wurde. Dabei weist der zweite Dickschichtwiderstand DW2 somit der als der zweite Dickschichtwiderstand DW2 ausgebildete, zweite Strombegrenzer STB2 eine größere Breite auf als der erste Dickschichtwiderstand DW1 somit der als der erste Dickschichtwiderstand DW1 ausgebildete, erste Strombegrenzer STB1. Dadurch weist der zweite Strombegrenzer STB2 einen kleineren Gesamtwiderstandswert auf als der erste Strombegrenzer STB1. Folglich ist eine schnellere Entladung durch den zweiten Entladestrompfad ELP2 bei einem aktiven Entladevorgang im Vergleich zu einem passiven Entladevorgang mit nur dem ersten Entladestrompfad ELP1 gewährleistet.

Der erste und der zweite Dickschichtwiderstand DW1 und DW2 sind miteinander und mit einem ersten elektrischen Anschluss P1 über eine erste Leiterbahn LB1 elektrisch verbunden. Dabei bildet der Überlappungsbereich zwischen dem ersten Dickschichtwiderstand DW1 und der ersten Leiterbahn LB1 den ersten Stromanschluss A41 des ersten Strombegrenzers STB1. Der Überlappungsbereich zwischen dem zweiten Dickschichtwiderstand DW2 und der ersten Leiterbahn LB1 bildet den ersten Stromanschluss A51 des zweiten Strombegrenzers STB2. Die erste Leiterbahn LB1 bildet einen Teil der elektrischen Verbindung von dem positiven Stromanschluss A11 des Zwischenkreiskondensators ES zu dem ersten Stromanschluss A41 des ersten Strombegrenzers STB1 sowie zu dem ersten Stromanschluss A51 des zweiten Strombegrenzers STB2 und somit einen Teil des ersten und des zweiten Entladestrompfades ELP1 und ELP2. Der erste elektrische Anschluss P1 kann direkt mit dem positiven Stromanschluss A11 des Zwischenkreiskondensators ES verlötet und so elektrisch direkt verbunden sein.

Eine zweite Leiterbahn LB2 teilt den ersten Dickschichtwiderstand DW1 in eine kleinere und in eine größere Fläche, wobei die kleinere Fläche des ersten Dickschichtwiderstands DW1 den ersten Widerstand R11 des ersten Strombegrenzers STB1 und die größere Fläche des ersten Dickschichtwiderstands DW1 den zweiten Widerstand R12 des ersten Strombegrenzers STB1 ausbildet. Die zweite Leiterbahn LB2 ist somit ein Teil des ersten Signalpfades SGP1 und verbindet den ersten und den zweiten Widerstand R11 und R12 des ersten Strombegrenzers STB1 miteinander und mit einem zweiten elektrischen Anschluss P2, der den Anschluss des ersten Signalpfades SGP1 an dem Differenzverstärker DV ausbildet.

Eine dritte Leiterbahn LB3 verbindet die kleinere Fläche des ersten Dickschichtwiderstands DW1 beziehungsweise den ersten Widerstand R11 des ersten Strombegrenzers STB1 mit einem dritten elektrischen Anschluss P3, der den ersten Stromanschluss A21 des Spannungsbegrenzers SPB ausbildet. Der Überlappungsbereich zwischen dem ersten Dickschichtwiderstand DW1 und der dritten Leiterbahn LB3 bildet somit den zweiten Stromanschluss A42 des ersten Strombegrenzers STB1.

Eine vierte Leiterbahn LB4 teilt den zweiten Dickschichtwiderstand DW2 in einer kleineren und in einer größeren Fläche, wobei die kleinere Fläche des zweiten Dickschichtwiderstands DW2 den ersten Widerstand R21 des zweiten Strombegrenzers STB2 und die größere Fläche des zweiten Dickschichtwiderstands DW2 den zweiten Widerstand R22 des zweiten Strombegrenzers STB2 ausbildet. Die vierte Leiterbahn LB4 ist somit ein Teil des dritten Signalpfades SGP3 und verbindet den ersten und den zweiten Widerstand R21 und R22 des zweiten Strombegrenzers STB2 miteinander und mit dem ebenfalls als ein Dickschichtwiderstand DW3 ausgebildeten Vorwiderstand R5 und anschließend einem elektrischen Anschluss P4, der den Anschluss des dritten Signalpfades SGP3 an der dritten Entkopplungsschaltungseinheit EK3 ausbildet.

Eine fünfte Leiterbahn LB5 verbindet die kleinere Fläche des zweiten Dickschichtwiderstands DW2, beziehungsweise den ersten Widerstand R21 des zweiten Strombegrenzers STB2, mit einem fünften elektrischen Anschluss P5, der den ersten Stromanschluss A31 des Halbleiterschalters S ausbildet. Der Überlappungsbereich zwischen dem zweiten Dickschichtwiderstand DW2 und der fünften Leiterbahn LB5 bildet somit den zweiten Stromanschluss A52 des zweiten Strombegrenzers STB2.

Auf den Dickschichtwiderständen DW1, DW2 und DW3 und den Leiterbahnen LB1, LB2, LB3, LB4 und LB5 ist eine Passivierungsschicht zum Schutz der Dickschichtwiderstände und der Leiterbahnen vor einer Korrosion aufgebracht, welche die Dickschichtwiderstände DW1, DW2 und DW3 und die Leiterbahnen LB1, LB2, LB3, LB4 und LB5 luftdicht verschließt.

Das Trägerteil KT ist auf einer in der Figur nicht dargestellten Wärmesenke flächig angeordnet, sodass die in den Dickschichtwiderständen DW1, DW2 und DW3 entstandene Wärme über die Wärmesenke besser abgeführt werden kann.

## Patentansprüche

1. Schaltungsanordnung (SA1, SA2) zum Entladen eines elektrischen Energiespeichers (ES), welche folgende Merkmale aufweist:
∘ einen ersten Entladestrompfad (ELP1) von einem ersten, positiven Stromanschluss (A11) des Energiespeichers (ES) zu einem zweiten, negativen Stromanschluss (A12) des Energiespeichers (ES) mit einem Spannungsbegrenzer (SPB) zu einem ungesteuerten, passiven Entladen des Energiespeichers (ES) und zum Halten einer Ladespannung (U_ES) des Energiespeichers (ES) zumindest auf einer Spannungsschwelle (U_TH), wobei der Spannungsbegrenzer (SPB) einen ersten Stromanschluss (A21) zu einer elektrischen Verbindung mit dem positiven Stromanschluss (A11) des Energiespeichers (ES) und einen zweiten Stromanschluss (A22) zu einer elektrischen Verbindung mit dem negativen Stromanschluss (A12) des Energiespeichers (ES) aufweist;
∘ einen zweiten Entladestrompfad (ELP2) von dem positiven Stromanschluss (A11) des Energiespeichers (ES) zu dem negativen Stromanschluss (A12) des Energiespeichers (ES) parallel zu dem ersten Entladestrompfad (ELP1) mit einem einen Ansteueranschluss (AS) aufweisenden, über diesen Ansteueranschluss (AS) steuerbaren Halbleiterschalter (S) zu einem gesteuerten, aktiven Entladen des Energiespeichers (ES), wobei der Halbleiterschalter (S) einen ersten Stromanschluss (A31) zu einer elektrischen Verbindung mit dem positiven Stromanschluss (A11) des Energiespeichers (ES) und einen zweiten Stromanschluss (A32) zu einer elektrischen Verbindung mit dem negativen Stromanschluss (A12) des Energiespeichers (ES) aufweist;
∘ zwischen dem ersten Stromanschluss (A21) des Spannungsbegrenzers (SPB) und dem Ansteueranschluss (AS) des Halbleiterschalters (S) einen ersten Steuerpfad (STP1) zum Bereitstellen eines ersten Steuersignals (SS1) von dem ersten Stromanschluss (A21) des Spannungsbegrenzers (SPB) an den Ansteueranschluss (AS) des Halbleiterschalters (S) zum Ansteuern des Halbleiterschalters (S);
∘ der erste Entladestrompfad (ELP1) zwischen dem positiven Stromanschluss (A11) des Energiespeichers (ES) und dem Spannungsbegrenzer (SPB) ferner einen ersten Strombegrenzer (STB1) zur Begrenzung eines ersten Entladestromes (I1) in dem ersten Entladestrompfad (ELP1) bei einem passiven Entladen des Energiespeichers (ES) aufweist,
**gekennzeichnet durch**,
∘ eine Überladeerkennungseinheit (ÜE) zum Erkennen einer Überladung des Energiespeichers (ES);
∘ einen ersten (SGP1) und einen zweiten (SGP2) Signalpfad zwischen der Überladeerkennungseinheit (ÜE) und dem ersten Strombegrenzer (STB1) zum Messen einer ersten Entladespannung (U_R11) an dem ersten Strombegrenzer (STB1);
∘ wobei die Überladeerkennungseinheit (ÜE) zur Erkennung einer Überladung des Energiespeichers (ES) anhand der ersten Entladespannung (U_R11) ausgeführt ist.

2. Schaltungsanordnung (SA1, SA2) nach Anspruch 1, bei der der zweite Entladestrompfad (ELP2) zwischen dem positiven Stromanschluss (A11) des Energiespeichers (ES) und dem Halbleiterschalter (S) ferner einen zweiten Strombegrenzer (STB2) zur Begrenzung eines zweiten Entladestromes (I2) in dem zweiten Entladestrompfad (ELP2) bei einem aktiven Entladen des Energiespeichers (ES) aufweist.

3. Schaltungsanordnung (SA1, SA2) nach Anspruch 2, bei der der erste (STB1) und/oder der zweite (STB2) Strombegrenzer jeweils als ein Dickschichtwiderstand (DW1, DW2) ausgebildet sind.

4. Schaltungsanordnung (SA1, SA2) nach einem der vorangehenden Ansprüche, bei der der Spannungsbegrenzer (SPB) eine Zenerdiode (ZD) umfasst.

5. Schaltungsanordnung (SA1, SA2) nach einem der vorangehenden Ansprüche, welche ferner eine zweite Entkopplungsschaltungseinheit (EK2) zu einer galvanischen Trennung der Überladeerkennungseinheit (ÜE) von dem ersten Entladestrompfad (ELP1) aufweist.

6. Schaltungsanordnung (SA1, SA2) nach einem der vorangehenden Ansprüche, welche ferner
o eine Entladesteuereinheit (EL) zum Ansteuern des Halbleiterschalters (S), und
o einen zweiten Steuerpfad (STP2) zwischen der Entladesteuereinheit (EL) und dem Ansteueranschluss (AS) des Halbleiterschalters (S) zum Weiterleiten eines zweiten Steuersignals (SS2) von der Entladesteuereinheit (EL) an den Ansteueranschluss (AS) des Halbleiterschalters (S) zum Ansteuern des Halbleiterschalters (S),
aufweist.

7. Schaltungsanordnung (SA1, SA2) nach Anspruch 6, welche ferner eine erste Entkopplungsschaltungseinheit (EK1) zu einer galvanischen Trennung der Entladesteuereinheit (EL) von dem ersten Steuerpfad (STP1) aufweist.

8. Schaltungsanordnung (SA1, SA2) nach einem der vorangehenden Ansprüche, welche ferner folgende Merkmale aufweist:
∘ eine Diagnoseeinheit (DE) zum Ermitteln eines Schaltzustands des Halbleiterschalters (S),
∘ einen dritten (SGP1) und einen vierten (SGP2) Signalpfad zwischen der Diagnoseeinheit (DA) und dem zweiten Strombegrenzer (R21) zum Messen einer zweiten Entladespannung (U_R21) an dem zweiten Strombegrenzer (STB2),
∘ wobei die Diagnoseeinheit (DE) zum Ermitteln des Schaltzustands des Halbleiterschalters (S) anhand der zweiten Entladespannung (U_R21) ausgeführt ist.

9. Schaltungsanordnung (SA1, SA2) nach Anspruch 8,
welche ferner
∘ eine dritte Entkopplungsschaltungseinheit (EK3) zu einer galvanischen Trennung der Diagnoseeinheit (DE) von dem zweiten Entladestrompfad (ELP2),
aufweist.

10. Schaltungsanordnung (SA1, SA2) nach einem der Ansprüche 6 bis 9, welche ferner eine Gegentaktendstufeneinheit (GT) mit einem Steuersignaleingangsanschluss (AG1) und einem Steuersignalausgangsanschluss (AG2) zum Ansteuern des Halbleiterschalters (S) aufweist, wobei der Steuersignaleingangsanschluss (AG1) mit dem ersten (STP1) und dem zweiten (STP2) Steuerpfad elektrisch verbunden ist, und der Steuersignalausgangsanschluss (AG2) mit dem Ansteueranschluss (AS) des Halbleiterschalters (S) elektrisch verbunden ist, wobei die Gegentaktendstufeneinheit (GT) einen Spannungsversorgungsanschluss (AV) aufweist, wobei der Spannungsversorgungsanschluss (AV) mit dem ersten Stromanschluss (A21) des Spannungsbegrenzers (SPB) elektrisch verbunden ist.

11. Schaltungsanordnung (SA1, SA2) nach einem der vorangehenden Ansprüche, welche ferner einen Kondensator (C) zwischen dem ersten (A21) und dem zweiten (A22) Stromanschluss des Spannungsbegrenzers (SPB) zum Bereitstellen eines Ansteuerstromes (IA) zum Ansteuern des Halbleiterschalters (S) aufweist.

12. Stromrichter (SR) zum Bereitstellen eines Stromes für eine elektrische Maschine (EM), wobei der Stromrichter (SR) einen elektrischen Energiespeicher (ES) zur Spannungsstabilisierung in dem Stromrichter (SR) und eine Schaltungsanordnung (SA1, SA2) nach einem der vorangehenden Ansprüche zum passiven und aktiven Entladen des Energiespeichers (ES) aufweist.

## Claims

1. Circuit arrangement (SA1, SA2) for discharging an electrical energy store (ES), which circuit arrangement has the following features:
∘ a first discharge current path (ELP1) from a first, positive electrical connection (A11) of the energy store (ES) to a second, negative electrical connection (A12) of the energy store (ES) comprising a voltage limiter (SPB) for uncontrolled, passive discharge of the energy store (ES) and for keeping a charging voltage (U_ES) of the energy store (ES) at least at a voltage threshold (U_TH), wherein the voltage limiter (SPB) has a first electrical connection (A21) for electrically connecting to the positive electrical connection (A11) of the energy store (ES) and a second electrical connection (A22) for electrically connecting to the negative electrical connection (A12) of the energy store (ES);
∘ a second discharge current path (ELP2) from the positive electrical connection (A11) of the energy store (ES) to the negative electrical connection (A12) of the energy store (ES) in parallel with the first discharge current path (ELP1) comprising a semiconductor switch (S), which has an actuation connection (AS) and is controllable via this actuation connection (AS), for controlled, active discharge of the energy store (ES), wherein the semiconductor switch (S) has a first electrical connection (A31) for electrically connecting to the positive electrical connection (A11) of the energy store (ES) and a second electrical connection (A32) for electrically connecting to the negative electrical connection (A12) of the energy store (ES);
∘ a first control path (STP1) between the first electrical connection (A21) of the voltage limiter (SPB) and the actuation connection (AS) of the semiconductor switch (S) for providing a first control signal (SS1) from the first electrical connection (A21) of the voltage limiter (SPB) to the actuation connection (AS) of the semiconductor switch (S) for actuating the semiconductor switch (S);
∘ the first discharge current path (ELP1) between the positive electrical connection (A11) of the energy store (ES) and the voltage limiter (SPB) also has a first current limiter (STB1) for limiting a first discharge current (I1) in the first discharge current path (ELP1) in the case of passive discharge of the energy store (ES),
**characterized by**
∘ an overcharging identification unit (ÜE) for identifying overcharging of the energy store (ES);
∘ a first signal path (SGP1) and a second signal path (SGP2) between the overcharging identification unit (ÜE) and the first current limiter (STB1) for measuring a first discharge voltage (U_R11) at the first current limiter (STB1);
∘ wherein the overcharging identification unit (ÜE) is designed to identify overcharging of the energy store (ES) on the basis of the first discharge voltage (U_R11).

2. Circuit arrangement (SA1, SA2) according to Claim 1, in which the second discharge current path (ELP2) between the positive electrical connection (A11) of the energy store (ES) and the semiconductor switch (S) also has a second current limiter (STB2) for limiting a second discharge current (12) in the second discharge current path (ELP2) in the case of active discharge of the energy store (ES).

3. Circuit arrangement (SA1, SA2) according to Claim 2, in which the first current limiter (STB1) and/or the second current limiter (STB2) are each in the form of a thick-film resistor (DW1, DW2).

4. Circuit arrangement (SA1, SA2) according to one of the preceding claims, in which the voltage limiter (SPB) comprises a zener diode (ZD).

5. Circuit arrangement (SA1, SA2) according to one of the preceding claims, said circuit arrangement furthermore having a second decoupling circuit unit (EK2) for galvanically isolating the overcharging identification unit (ÜE) from the first discharge current path (ELP1).

6. Circuit arrangement (SA1, SA2) according to one of the preceding claims, said circuit arrangement furthermore having
∘ a discharge control unit (EL) for actuating the semiconductor switch (S), and
∘ a second control path (STP2) between the discharge control unit (EL) and the actuation connection (AS) of the semiconductor switch (S) for passing on a second control signal (SS2) from the discharge control unit (EL) to the actuation connection (AS) of the semiconductor switch (S) for actuating the semiconductor switch (S).

7. Circuit arrangement (SA1, SA2) according to Claim 6, said circuit arrangement furthermore having
∘ a first decoupling circuit unit (EK1) for galvanically isolating the discharge control unit (EL) from the first control path (STP1).

8. Circuit arrangement (SA1, SA2) according to one of the preceding claims, said circuit arrangement further having the following features:
∘ a diagnosis unit (DE) for determining a switching state of the semiconductor switch (S),
∘ a third signal path (SGP1) and a fourth signal path (SGP2) between the diagnosis unit (DE) and the second current limiter (STB2) for measuring a second discharge voltage (U_R21) at the second current limiter (STB2),
∘ wherein the diagnosis unit (DE) is designed to determine the switching state of the semiconductor switch (S) on the basis of the second discharge voltage (U_R21).

9. Circuit arrangement (SA1, SA2) according to Claims 8, said circuit arrangement further having
∘ a third decoupling circuit unit (EK3) for galvanically isolating the diagnosis unit (DE) from the second discharge current path (ELP2).

10. Circuit arrangement (SA1, SA2) according to one of Claims 6 to 9, said circuit arrangement further having a push-pull output stage unit (GT) comprising a control signal input connection (AG1) and a control signal output connection (AG2) for actuating the semiconductor switch (S), wherein the control signal input connection (AG1) is electrically connected to the first control path (STP1) and the second control path (STP2), and the control signal output connection (AG2) is electrically connected to the actuation connection (AS) of the semiconductor switch (S), wherein push-pull output stage unit (GT) has a voltage supply connection (AV), wherein the voltage supply connection (AV) is electrically connected to the first electrical connection (A21) of the voltage limiter (SPB).

11. Circuit arrangement (SA1, SA2) according to one of the preceding claims, said circuit arrangement further having a capacitor (C) between the first electrical connection (A21) and the second electrical connection (A22) of the voltage limiter (SPB) for providing an actuation current (IA) for actuating the semiconductor switch (S).

12. Power converter (SR) for providing a current for an electric machine (EM), wherein the power converter (SR) has an electrical energy store (ES) for voltage stabilization in the power converter (SR) and a circuit arrangement (SA1, SA2) according to one of the preceding claims for passive and active discharge of the energy store (ES).

## Revendications

1. Arrangement de circuit (SA1, SA2) destiné à décharger un accumulateur d'énergie (ES) électrique, lequel possède les caractéristiques suivantes :
∘ un premier trajet de courant de décharge (ELP1) d'une première borne de courant positive (A11) de l'accumulateur d'énergie (ES) à une deuxième borne de courant négative (A12) de l'accumulateur d'énergie (ES), comprenant un limiteur de tension (SPB) destiné à une décharge passive non contrôlée de l'accumulateur d'énergie (ES) et à maintenir une tension de charge (U_ES) de l'accumulateur d'énergie (ES) au moins à un seuil de tension (U_TH), le limiteur de tension (SPB) possédant une première borne de courant (A21) servant à une liaison électrique avec la borne de courant positive (A11) de l'accumulateur d'énergie (ES) et une deuxième borne de courant (A22) servant à une liaison électrique avec la borne de courant négative (A12) de l'accumulateur d'énergie (ES) ;
∘ un deuxième trajet de courant de décharge (ELP2) de la borne de courant positive (A11) de l'accumulateur d'énergie (ES) à la borne de courant négative (A12) de l'accumulateur d'énergie (ES), parallèle au premier trajet de courant de décharge (ELP1), comprenant un commutateur à semiconducteur (S) possédant une borne d'attaque (AS) et pouvant être commandé par cette borne d'attaque (AS), servant à une décharge active contrôlée de l'accumulateur d'énergie (ES), le commutateur à semiconducteur (S) une première borne de courant (A31) servant à une liaison électrique avec la borne de courant positive (A11) de l'accumulateur d'énergie (ES) et une deuxième borne de courant (A32) servant à une liaison électrique avec la borne de courant négative (A12) de l'accumulateur d'énergie (ES) ;
∘ un premier trajet de commande (STP1) entre la première borne de courant (A21) du limiteur de tension (SPB) et la borne d'attaque (AS) du commutateur à semiconducteur (S), pour commander le commutateur à semiconducteur (S) ;
ole premier trajet de courant de décharge (ELP1) comprenant en outre, entre la borne de courant positive (A11) de l'accumulateur d'énergie (ES) et le limiteur de tension (SPB), un premier limiteur de courant (STB1) destiné à limiter un premier courant de décharge (I1) dans le premier trajet de courant de décharge (ELP1) lors d'une décharge passive de l'accumulateur d'énergie (ES),
**caractérisé par**
∘ une unité de reconnaissance de surcharge (ÜE) destinée à reconnaître une surcharge de l'accumulateur d'énergie (ES) ;
∘ un premier (SGP1) et un deuxième (SGP2) trajet de signal entre l'unité de reconnaissance de surcharge (ÜE) et le premier limiteur de courant (STB1), destinés à mesurer une première tension de décharge (U_R11) au niveau du premier limiteur de courant (STB1) ;
ol'unité de reconnaissance de surcharge (ÜE) étant conçue pour reconnaître une surcharge de l'accumulateur d'énergie (ES) à l'aide de la première tension de décharge (U_R11).

2. Arrangement de circuit (SA1, SA2) selon la revendication 1, avec lequel le deuxième trajet de courant de décharge (ELP2) comprend en outre, entre la borne de courant positive (A11) de l'accumulateur d'énergie (ES) et le commutateur à semiconducteur (S), un deuxième limiteur de courant (STB2) destiné à limiter un deuxième courant de décharge (I2) dans le deuxième trajet de courant de décharge (ELP2) lors d'une décharge active de l'accumulateur d'énergie (ES).

3. Arrangement de circuit (SA1, SA2) selon la revendication 2, avec lequel le premier (STB1) et/ou le deuxième limiteur de courant (STB2) sont respectivement réalisés sous la forme d'une résistance à couche épaisse (DW1, DW2).

4. Arrangement de circuit (SA1, SA2) selon l'une des revendications précédentes, avec lequel le limiteur de tension (SPB) comporte une diode Zener (ZD).

5. Arrangement de circuit (SA1, SA2) selon l'une des revendications précédentes, lequel possède en outre une deuxième unité de circuit de découplage (EK2) servant à une isolation galvanique entre l'unité de reconnaissance de surcharge (ÜE) et le premier trajet de courant de décharge (ELP1).

6. Arrangement de circuit (SA1, SA2) selon l'une des revendications précédentes, lequel possède en outre
∘ une unité de commande de décharge (EL) destinée à attaquer le commutateur à semiconducteur (S), et
∘ un deuxième trajet de commande (STP2) entre l'unité de commande de décharge (EL) et la borne d'attaque (AS) du commutateur à semiconducteur (S) servant à la transmission d'un deuxième signal de commande (SS2) de l'unité de commande de décharge (EL) à la borne d'attaque (AS) du commutateur à semiconducteur (S) pour l'attaque du commutateur à semiconducteur (S).

7. Arrangement de circuit (SA1, SA2) selon la revendication 6, lequel possède en outre une première unité de circuit de découplage (EK1) servant à une isolation galvanique entre l'unité de commande de décharge (EL) et le premier trajet de commande (STP1).

8. Arrangement de circuit (SA1, SA2) selon l'une des revendications précédentes, lequel possède en outre les caractéristiques suivantes :
∘ une unité de diagnostic (DE) destinée à déterminer un état de commutation du commutateur à semiconducteur (S),
∘ un troisième (SGP1) et un quatrième (SGP2) trajet de signal entre l'unité de diagnostic (DE) et le deuxième limiteur de courant (R21) destinés à mesurer une deuxième tension de décharge (U_R21) au niveau du deuxième limiteur de courant (STB2),
∘ l'unité de diagnostic (DE) étant conçue pour déterminer l'état de commutation du commutateur à semiconducteur (S) à l'aide de la deuxième tension de décharge (U_R21).

9. Arrangement de circuit (SA1, SA2) selon la revendication 8, lequel possède en outre
∘ une troisième unité de circuit de découplage (EK3) servant à une isolation galvanique entre l'unité de diagnostic (DE) et le deuxième trajet de courant de décharge (ELP2).

10. Arrangement de circuit (SA1, SA2) selon l'une des revendications 6 à 9, lequel possède en outre une unité d'étage final symétrique (GT) comprenant une borne d'entrée de signal de commande (AG1) et une borne de sortie de signal de commande (AG2) servant à attaquer le commutateur à semiconducteur (S), la borne d'entrée de signal de commande (AG1) étant reliée électriquement au premier (STP1) et au deuxième trajet de commande (STP2), et la borne de sortie de signal de commande (AG2) étant reliée électriquement à la borne d'attaque (AS) du commutateur à semiconducteur (S), l'unité d'étage final symétrique (GT) possédant une borne d'alimentation électrique (AV), la borne d'alimentation électrique (AV) étant reliée électriquement à la première borne de courant (A21) du limiteur de tension (SPB).

11. Arrangement de circuit (SA1, SA2) selon l'une des revendications précédentes, lequel possède en outre un condensateur (C) entre la première (A21) et la deuxième borne de courant (A22) du limiteur de tension (SPB) servant à délivrer un courant d'attaque (IA) destiné à l'attaque du commutateur à semiconducteur (S).

12. Convertisseur statique (SR) destiné à délivrer un courant pour une machine électrique (EM), le convertisseur statique (SR) possédant un accumulateur d'énergie électrique (ES) destiné à la stabilisation de la tension dans le convertisseur statique (SR) et un arrangement de circuit (SA1, SA2) selon l'une des revendications précédentes servant à la décharge passive et active de l'accumulateur d'énergie (ES).
